# EUROPÄISCHE PATENTSCHRIFT

(11) **EP 3 155 322 B1**
(45) Veröffentlichungstag und Bekanntmachung des Hinweises auf die Patenterteilung: **25.09.2019**
(21) Anmeldenummer: 15726626.3
(22) Anmeldetag: 05.06.2015
(51) Int. Cl.: F23J 15/00, F01N 3/20

(54) **ABGASBEHANDLUNGSVORRICHTUNG UND VERFAHREN ZUR ABGASBEHANDLUNG**
ARRANGEMENT AND PROCEDURE FOR THE TREATMENT OF FLUE GAS
AGENCEMENT ET PROCÉDURE POUR LE TRAITEMENT DES GAS D'ÉCHAPPEMENT

(30) Priorität: 10.06.2014 DE 102014108152
(43) Veröffentlichungstag der Anmeldung: 19.04.2017
(73) Patentinhaber: thyssenkrupp Industrial Solutions AG, 45143 Essen (DE); thyssenkrupp AG, 45143 Essen (DE)
(72) Erfinder: STENDER, Timo, 58730 Fröndenberg (DE)
(74) Vertreter: thyssenkrupp Intellectual Property GmbH
(86) Internationale Anmeldenummer: PCT/EP2015/062574
(87) Internationale Veröffentlichungsnummer: WO 2015/189103

(56) Entgegenhaltungen:
- US-A- 4 562 795
- US-A- 5 500 194
- US-A1- 2009 035 200
- US-A1- 2011 311 423

## Beschreibung

Die Erfindung betrifft eine Abgasbehandlungsvorrichtung und ein Verfahren zur Abgasbehandlung. Die Abgasbehandlungsvorrichtung und das Verfahren können insbesondere im Rahmen der Herstellung oder Bearbeitung von Zementklinker, Kalk oder Mineralien zur Anwendung kommen.

Aus der DE 197 20 205 A1 ist ein Verfahren zur Reinigung von mit Stickoxiden beladenem Abgas bekannt, bei dem das Abgas in einem Wärmetauscher vorgewärmt, dann mittels eines Brenners nacherhitzt und anschließend unter Zugabe eines Reduktionsmittels einem Reduktionskatalysator zugeführt wird. Die aus dem Reduktionskatalysator austretenden heißen Abgase werden dazu genutzt, einen von zwei Wärmespeichern aufzuladen. Der andere Wärmespeicher dient währenddessen als Wärmetauscher für das dem Reduktionskatalysator zuzuführende Abgas. Durch ein zyklisches Umschalten der beiden Wärmespeicher wird somit stets einer der Wärmspeicher aufgeladen, während der andere Wärmespeicher als Wärmetauscher zum Vorerwärmen des Abgases genutzt wird.

In der DE 197 20 205 A1 ist weiterhin die Möglichkeit einer Kombination des Reduktionskatalysators mit einem diesem nachgeschalteten Oxidationskatalysator offenbart, wodurch gleichzeitig organische Verbindungen und insbesondere Furane und Dioxine aus dem Abgas entfernt werden sollen.

Die US 4,562,795 beschreibt eine mehrstufige Ofenanlage mit einem ersten Ofen, einem Staubfilter und einem zweiten Ofen. Der zweite Ofen umfasst einen Oxidationskatalysator zur Oxidation von über eine Brennstoffzufuhr zugeführtem Brennstoff in Verbindung mit einem Restsauerstoff, der in dem Abgas des ersten Ofens noch enthalten ist. Der zweite Ofen umfasst weiterhin einen dem Oxidationskatalysator nachgeschalteten Multifunktionskatalysator, der (auch) als Reduktionskatalysator für Stickoxide dient, sowie einen weiteren Oxidationskatalysator zur Oxidation von Schwefeldioxid und Schwefeltrioxid. Dieser weitere Oxidationskatalysator kann entweder stromauf der Brennstoffzufuhr oder stromab des Multifunktionskatalysators angeordnet sein. Bei einer Anordnung des weiteren Oxidationskatalysator stromab des Multifunktionskatalysators ist zwischen diesen Katalysatoren noch eine Heizvorrichtung vorgesehen, durch die das Abgas auf die für die Oxidation des Schwefeldioxids erforderliche Temperatur von 400°C bis 500°C erwärmt werden kann.

Die US 5,500,194 offenbart ein Verfahren zur Nachbehandlung von Abgas in einem ersten Katalysator, in dem chemisch gebundener Stickstoff (N) mit überschüssigem CO und H₂ zu CO₂, H₂O und N₂ reagieren soll. Das aus dem ersten Katalysator austretende Abgas wird anschließend über einen Wärmetauscher in einen zweiten Katalysator geführt, in dem Ammoniak (als Nebenprodukt) und weitere chemisch gebundene Stickstoffkomponenten oxidiert werden sollen.

Ausgehend von diesem Stand der Technik hat der Erfindung die Aufgabe zugrunde gelegen, eine Abgasbehandlungsvorrichtung bereit zu stellen, die in vorteilhafter Weise sowohl eine Reduktion von Stickoxiden als auch eine Oxidation von kohlenstoffhaltigen Verbindungen, wie insbesondere Kohlenmonoxid, in Abgasen, insbesondere Rauchgasen, ermöglicht. Insbesondere sollte sich die Abgasbehandlungsvorrichtung durch höhere Oxidationsraten für die kohlenstoffhaltigen Verbindungen im Vergleich zu der aus der DE 197 20 205 A1 bekannte Abgasbehandlungsvorrichtung auszeichnen.

Diese Aufgabe wird durch eine Abgasbehandlungsvorrichtung gemäß dem Patentanspruch 1 sowie ein Verfahren zur Abgasbehandlung gemäß dem Patentanspruch 15 gelöst. Vorteilhafte Ausgestaltungen der erfindungsgemäßen Abgasbehandlungsvorrichtung sowie vorteilhafte Ausführungsformen des erfindungsgemäßen Verfahrens sind Gegenstand der weiteren Patentansprüche und ergeben sich aus der nachfolgenden Beschreibung der Erfindung.

Der Erfindung liegt die Erkenntnis zugrunde, dass für besonders hohe Oxidationsraten in einem Oxidationskatalysator eine Temperatur von mindestens 400°C vorteilhaft ist. Diese Temperatur ist jedoch für einen Reduktionskatalysator in der Regel bereits zu hoch. Grundgedanke der Erfindung ist daher, das zu behandelnde Abgas den in Reihe geschalteten Katalysatoren mit der für diese jeweils möglichst optimalen Temperatur zuzuführen. Dazu sind zumindest zwischen dem Oxidationskatalysator und dem Reduktionskatalysator Mittel zur (aktiven) Beeinflussung der Temperatur des Abgases vorgesehen. Da die Temperatur des Abgases in dem Reduktionskatalysator geringer sein sollte als in dem nachgeschalteten Oxidationskatalysator, ist vorzugsweise vorgesehen, das diese Mittel als Vorwärmvorrichtung ausgebildet sind, die das Abgas nach der Behandlung in dem Reduktionskatalysator und vor der Behandlung in dem Oxidationskatalysator erwärmen.

Demnach ist eine gattungsgemäße Abgasbehandlungsvorrichtung, die zumindest einen Reduktionskatalysator (vorzugsweise mit einer stromauf bezüglich des Abgasstroms von diesem angeordneten Zudosiervorrichtung für ein Reduktionsmittel) und einen dem Reduktionskatalysator (in Strömungsrichtung des Abgases) nachgeschalteten Oxidationskatalysator, der für eine Oxidation von kohlenstoffhaltigen Verbindungen vorgesehen ist, umfasst, erfindungsgemäß dadurch gekennzeichnet, dass zwischen dem Reduktionskatalysator und dem Oxidationskatalysator eine (erste) Temperaturbeeinflussungsvorrichtung, insbesondere Vorwärmvorrichtung, für das Abgas angeordnet ist.

Ein entsprechendes Verfahren zur Abgasbehandlung, bei dem das Abgas durch einen Reduktionskatalysator und anschließend einen Oxidationskatalysator, der für eine Oxidation von kohlenstoffhaltigen Verbindungen vorgesehen ist, geführt wird, sieht erfindungsgemäß vor, dass die Temperatur des Abgases nach der Behandlung in dem Reduktionskatalysator und vor der Behandlung in dem Oxidationskatalysator (aktiv) beeinflusst und insbesondere das Abgas erwärmt wird.

Dabei kann zur Erzielung hoher Oxidationsraten vorteilhaft vorgesehen sein, dass das Abgas vor der Behandlung in dem Oxidationskatalysator auf eine Temperatur von zwischen 250°C und 650°C, vorzugsweise von zwischen 300°C und 500°C und besonders bevorzugt von zwischen 350°C und 450°C erwärmt wird.

In einer weiterhin bevorzugten Ausgestaltung der erfindungsgemäßen Abgasbehandlungsvorrichtung kann auch noch eine stromauf des Reduktionskatalysators angeordnete, zweite Temperaturbeeinflussungsvorrichtung, insbesondere Vorwärmvorrichtung, für das Abgas vorgesehen sein.

Das erfindungsgemäße Verfahren kann dementsprechend ein Beeinflussen der Temperatur, insbesondere ein Erwärmen, des Abgases vor der Behandlung in dem Reduktionskatalysator vorsehen.

Dabei kann zur Erzielung von hohen Minderungsraten in dem Reduktionskatalysator für insbesondere Stickoxide vorteilhaft vorgesehen sein, dass das Abgas vor der Behandlung in dem Reduktionskatalysator auf eine Temperatur von zwischen 160°C und 440°C, vorzugsweise von zwischen 180°C und 380°C und besonders bevorzugt von zwischen 200°C und 350°C erwärmt wird.

In einer vorteilhaften Ausgestaltung der ersten und/oder der zweiten Temperaturbeeinflussungsvorrichtung kann vorgesehen sein, dass diese einen Wärmetauscher umfasst/-en. Dabei kann der Wärmetauscher insbesondere regenerativ ausgebildet sein, so dass die in dem Wärmetauscher auf das Abgas übergehende Wärmeenergie zumindest teilweise Abwärme darstellt. Möglich ist aber auch, die in dem Vorwärmer auf das Abgas übergehende Wärmeenergie zumindest teilweise für (nur) diesen Zweck zu erzeugen. Hierzu kann die erste und/oder die zweite Temperaturbeeinflussungsvorrichtung beispielsweise einen Zuheizer (d.h. eine Vorrichtung zur Wärmeerzeugung, insbesondere durch Verbrennen eines Brennstoffs, mit dem primären oder ausschließlichen Ziel der Wärmeeinbringung in das Abgas), Zumischung von Gasen umfassen, in dem Brennstoffe zur Wärmeenergieerzeugung verbrannt werden können. Weiterhin kann die Funktion der Temperaturbeeinflussungsvorrichtung auch auf einer Zumischung eines Fluids, insbesondere eines Gases, mit einer anderen, insbesondere höheren Temperatur im Vergleich zu der lokalen Temperatur des Abgases beruhen. Die Temperaturbeeinflussungsvorrichtung kann dazu Zumischer für ein Fluid, insbesondere ein Gas (beispielsweise ein anderes Abgas oder ein Kühlgas) umfassen.

Die Integration eines Wärmetauschers in die erste und/oder zweite Temperaturbeeinflussungsvorrichtung kann insbesondere ermöglichen, die in dem Abgas stromab des Oxidationskatalysators noch enthaltene Wärmenergie für das Vorwärmen des Abgases vor dessen Eintritt in den Reduktionskatalysator und/oder den Oxidationskatalysator zu nutzen und in dem/den Wärmetauscher(n) entsprechend teilweise zu übertragen. Dabei kann vorteilhaft auch die infolge einer exothermen Oxidation in dem Oxidationskatalysator erzeugte Wärmeenergie genutzt werden.

Alternativ oder zusätzlich dazu kann auch vorgesehen sein, dass in dem Wärmetauscher Wärme von einem anderen (als dem bereits behandelten Abgas) Medium übertragen wird.

Bei dem Medium kann es sich insbesondere um ein Fluid und insbesondere einen Fluidstrom handeln. Ein solcher Fluidstrom kann insbesondere in einer Anlage zur mechanischen und/oder thermischen Aufbereitung eines Materials, in der die erfindungsgemäße Abgasbehandlungsvorrichtung eingesetzt wird, genutzt oder erzeugt werden. Bei dieser Anlage kann es sich beispielsweise um eine Anlage zur Zementklinkerherstellung handeln. Diese kann einen Ofen, beispielsweise einen Drehrohrofen, zum Brennen des Zementklinkers, einen in Richtung des Durchlaufs des Materials (hier dann das Zementrohrmehl) dem Ofen vorgeschalteten Materialvorwärmer und/oder einen in Richtung des Durchlaufs des Materials (hier dann der Zementklinker) dem Ofen nachgeschalteten Klinkerkühler und/oder Vorrichtungen zum Abzug von Teilströmen von Medien, insbesondere Gasen, wie beispielsweise Bypassinstallationen, umfassen. Bei dem in dem/den Wärmetauscher(n) der erfindungsgemäßen Abgasbehandlungsvorrichtung genutzten Fluidstrom kann es sich dann beispielsweise um den gesamten oder einen Teilstrom des aus dem Ofen stammenden, in dem Materialvorwärmer zum Vorwärmen des Zementrohmehls genutzten Abgasstroms handeln. Auch kann es sich bei dem Fluidstrom um aufgewärmte Kühlluft handeln, die den Klinkerkühler teilweise ("Kühlermittenluft") oder weitgehend vollständig ("Kühlerabluft") durchlaufen hat, handeln. Auch besteht die Möglichkeit, aus dem Ofen stammendes Abgas vor dem Eintritt in den Materialvorwärmer abzuzweigen und in dem/den Wärmetauschern der erfindungsgemäßen Abgasbehandlungsvorrichtung für einen Wärmetausch mit dem dem Reduktionskatalysator und dem Oxidationskatalysator zuzuführenden Abgas zu nutzen. Weiterhin kann auch ein Abgas oder eine Abluft aus einem anderen Anlagenteil, wie beispielsweise einer Trocknungsanlage (mit oder ohne zusätzliche Feuerung), genutzt werden.

Ein Wärmeübergang von dem Medium auf das vorzuwärmende Abgas kann direkt (gegebenenfalls durch eine Trennwand hindurch) oder indirekt unter Zwischenschaltung eines Transfermediums (insbesondere flüssig, gasförmig oder eine Mischung aus beidem) erfolgen.

Bei dem Medium kann es sich auch um dasjenige Material handeln, bei dessen Aufbereitung das mittels der erfindungsgemäßen Abgasbehandlungsvorrichtung zu behandelnde Abgas entsteht. Bei einer Anlage zur Zementklinkerherstellung kann es sich bei dem Medium insbesondere um Zementrohmehl handeln, das vorzugsweise in einem Materialvorwärmer von aus dem Ofen der Anlage stammendem Abgas vorgewärmt wird. Bei dem zu behandelnden Abgas kann es sich dann auch um das zu behandelnde Abgas handeln. Der Materialvorwärmer kann dann zumindest einen Teil der ersten und/oder zweiten Temperaturbeeinflussungsvorrichtung, insbesondere jedoch der zweiten Temperaturbeeinflussungsvorrichtung der erfindungsgemäßen Abgasbehandlungsvorrichtung darstellen, wobei die vorwärmende Funktion für das zu behandelnde Abgas dadurch erreicht werden kann, dass das Abgas in dem Materialvorwärmer bei Bedarf in verändertem Maße, insbesondere in nur geringerem Maße durch einen Wärmeübergang auf das Material abgekühlt wird, als dies in anderen Betriebszuständen der Anlage vorgesehen ist und insbesondere als es die maximale Wärmeübergangsleistung des Materialvorwärmers ermöglicht.

Dazu kann vorzugsweise vorgesehen sein, dass der Wärmetauscher der erfindungsgemäßen Abgasbehandlungsvorrichtung (beziehungsweise der Materialvorwärmer der Anlage), eine oder mehrere Wärmetauscherstufen umfasst, wobei eine erste Zufuhr für den Materialstrom, bezogen auf die Strömungsrichtung des Materialsstroms durch den Wärmetauscher, hinter einer Wärmetauscherstufe angeordnet ist und eine zweite Zufuhr für den Materialstrom, bezogen auf die Richtung des Durchlaufs des Materials durch den Wärmetauscher, vor dieser Wärmetauscherstufe angeordnet ist, und eine Steuereinrichtung zur bedarfsweisen Aufteilung des Materialstroms auf die erste Zufuhr und die zweite Zufuhr vorgesehen ist. In Abhängigkeit davon, welcher Anteil des vorzuwärmenden Materials welche beziehungsweise wie viele Wärmetauscherstufen durchläuft, kann der Wärmeübergang von dem Abgas auf das Material und damit die (Rest-Temperatur des Abgases eingestellt werden.

Die bedarfsweise von dem vorzuwärmenden Material (teilweise) umgehbare Wärmetauscherstufe ist vorzugsweise diejenige, die von dem Material beim Durchlauf durch den Wärmetauscher (bzw. Materialvorwärmer) zuerst durchlaufen wird. Dadurch kann erreicht werden, dass der Wärmetausch von dem Abgas auf das Material primär in dem oder den der Aufbereitungsvorrichtung (insbesondere dem (Drehrohr-)Ofen) näher liegenden Wärmetauscherstufen erfolgt. Dies kann sich positiv auf Druckverluste im Wärmetauscher (bzw. Materialvorwärmer) auswirken. Weiterhin bevorzugt kann der Wärmetauscher (bzw. Materialvorwärmer) in Form eines mehrstufigen (z.B. vier, fünf oder sechs Stufen) Zyklonvorwärmers ausgebildet sein, dessen Aufbau und Funktionsweise allgemein bekannt sind.

Der Wärmetauscher der erfindungsgemäßen Abgasbehandlungsvorrichtung kann weiterhin einen Wärmespeicher umfassen, so dass eine Temperaturbeeinflussung, insbesondere ein Vorwärmen des in den Reduktionskatalysator oder den Oxidationskatalysator eintretenden Abgases, durch einen Wärmetausch mit einem Wärmespeichermedium erfolgt.

Dabei kann insbesondere vorgesehen sein, dass die erste und/oder zweite Temperaturbeeinflussungsvorrichtung (jeweils) mindestens zwei Wärmespeicher umfasst, die wechselweise entweder von dem dem Oxidationskatalysator oder dem Reduktionskatalysator zuzuführenden Abgas durchströmt werden, um dieses vorzuerwärmen, oder von aus dem Oxidationskatalysator ausgetretenem Abgas durchströmt werden, um von diesem Wärmeenergie aufzunehmen. Dadurch wird folglich ein Teil der Wärmenergie des aus dem Oxidationskatalysator bereits ausgetretenen Abgases genutzt, um das Abgas, das in den Reduktionskatalysator oder den Oxidationskatalysator eintritt, vorzuwärmen. Dies ermöglicht insbesondere eine regenerative Nutzung von Wärmeenergie, die infolge einer exothermen Oxidation in dem Oxidationskatalysator freigesetzt wird.

Da erfindungsgemäß insbesondere vorgesehen sein kann, das in den Reduktionskatalysator eintretende Abgas auf eine geringere Temperatur vorzuwärmen als das in den Oxidationskatalysator eintretende Abgas, kann weiterhin vorgesehen sein, sofern sowohl die erste als auch die zweite Temperaturbeeinflussungsvorrichtung jeweils mindestens einen, vorzugsweise mindestens zwei Wärmespeicher umfassen, dass das aus dem Oxidationskatalysator ausgetretene Abgas zunächst den dem Oxidationskatalysator zugeordneten Wärmespeicher und anschließend den dem Reduktionskatalysator zugeordneten Wärmespeicher durchströmt, um diese "aufzuladen". Andere, insbesondere parallele Verschaltungen der Wärmespeicher in dem Abgasstrom sind aber auch möglich.

Als für eine Verwendung in der erfindungsgemäßen Abgasbehandlungsvorrichtung vorteilhaft geeignet haben sich Wärmespeicher gezeigt, die eine keramische Wärmespeichermasse umfassen.

Insbesondere dann, wenn ein Wärmeübergang, der für das Erzielen eines Solltemperaturbereichs für das in den Reduktionskatalysator oder den Oxidationskatalysator eintretende Abgas notwendig ist, durch einen Wärmetausch mit dem bereits behandelten Abgas oder einem anderen Medium nicht vollständig erreichbar ist, kann vorgesehen sein, diesen Solltemperaturbereich durch ein Zuheizen, d.h. eine Wärmeerzeugung mit dem ausschließlichen oder zumindest primären Ziel einer Wärmeenergieeinbringung in das Abgas, zu erreichen. Dazu kann die erste und/oder zweite Vorwärmvorrichtung der erfindungsgemäßen Abgasbehandlungsvorrichtung einen entsprechenden Zuheizer umfassen. Die Wärmeenergieerzeugung in dem Zuheizer kann insbesondere auf einem Verbrennen eines Brennstoffs beruhen, wobei auch andere, beispielsweise elektrische Möglichkeiten der Wärmeerzeugung vorgesehen sein können. Als Brennstoff für einen solchen Zuheizer können insbesondere leicht und schnell verbrennbare Brennstoffe, wie insbesondere Gase (z.B. Erdgas), Erdöl und/oder Kohle zum Einsatz kommen.

In einer weiterhin bevorzugten Ausgestaltung der erfindungsgemäßen Abgasbehandlungsvorrichtung kann noch ein Staubfilter vorgesehen sein, der Staub (d.h. insbesondere Feststoffpartikel mit einer mittleren Korngröße von zwischen 3 µm und 10 µm) aus dem Abgas separiert. Dabei kann der Staubfilter vorzugsweise dem Reduktionskatalysator (in Strömungsrichtung des Abgases) vorgeschaltet sein, um eine Beaufschlagung des Reduktionskatalysators und des Oxidationskatalysators mit dem Staub, der zu deren schnelleren Deaktivierung führen könnte, zu vermeiden. Das Vorsehen eines Staubfilters kann insbesondere dann vorteilhaft sein, wenn die Staubbeladung des Abgases (vor dem Staubfilter) mindestens 30 g/m³ i.N. (i.N.: im Normalzustand bzw. bei Normbedingungen).

Die erfindungsgemäße Abgasbehandlungsvorrichtung und/oder eine Durchführung des erfindungsgemäßen Verfahrens eignet sich insbesondere für die Reinigung von Abgas (Rauchgas), das bei der Herstellung und/oder Bearbeitung von Grundstoffen, insbesondere Grundstoffe der Montanindustrie und/oder der Kraftwerkstechnik zur Erzeugung von Energie entsteht. Ein besonders vorteilhafter Einsatzbereich ist die Reinigung von Abgas (Rauchgas), das bei der Herstellung und/oder Bearbeitung von Grundstoffen in Form von Zement, Kalk und/oder Mineralien entsteht.

Dabei können, insbesondere zur Bereitstellung von Wärmeenergie für ein Vorwärmen des Abgases, auch Anlagen oder Anlagenkomponenten, die nicht der Behandlung eines Grundstoffs dienen, umfassen. Insbesondere kann für eine Temperaturbeeinflussungsvorrichtung, die in Form eines Zumischers oder eines Wärmetauschers ausgebildet ist, eine Komponente und insbesondere ein in der Komponente geführter Material- oder Fluidstrom einer einsatzfremden Anlage oder Vorrichtung, beispielsweise der Kraftwerksindustrie (insbesondere Verbrennung von Materialien (insbesondere Grundstoffe, aber auch z.B. Abfall) zur Gewinnung von insbesondere elektrischer Energie), genutzt werden. Diese einsatzfremden Anlagen oder Vorrichtungen können beispielsweise auch der Trocknung, Torrefizierung und/oder der Pyrolyse eines insbesondere kohlenstoffhaltigen Material- oder Fluidstroms dienen.

Die Verwendung unbestimmter Artikel ("ein", "einer", "eines", etc.), insbesondere in den Patentansprüchen und dem diese erläuternden Teil der Beschreibung, ist als solche und nicht als Verwendung von Zahlwörtern zu verstehen. Eine solche Verwendung ist somit so zu verstehen, dass die damit gekennzeichneten Elemente mindestens einmal vorhanden sind und mehrmals vorhanden sein können.

Die Erfindung wird nachfolgend anhand von in den Zeichnungen dargestellten Ausführungsbeispielen näher erläutert. In den Zeichnungen zeigt die
- Fig. 1:: in einer schematischen Darstellung eine erfindungsgemäße Abgasbehandlungsvorrichtung in einer ersten Schaltstellung;
- Fig. 2:: die Abgasbehandlungsvorrichtung gemäß der Fig. 1 in einer zweiten Schaltstellung; und
- Fig. 3:: eine Anlage zum Brennen von Zementklinker mit einer erfindungsgemäßen Abgasbehandlungsvorrichtung.

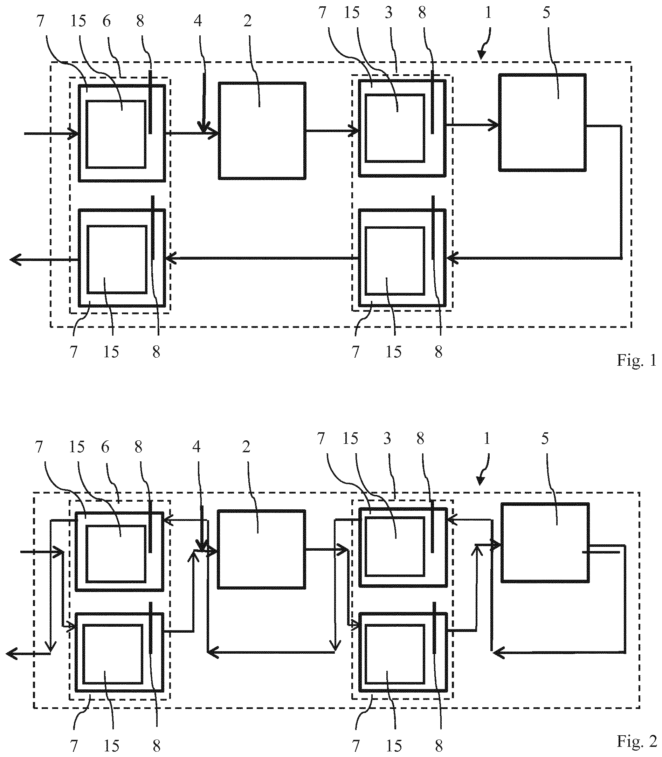

Die Fig. 1 und 2 zeigen schematisch eine Ausführungsform einer erfindungsgemäßen Abgasbehandlungsvorrichtung 1, wie sie insbesondere zur Behandlung von Abgas, das aus einer Aufbereitungsvorrichtung zur mechanischen und/oder thermischen Aufbereitung von anorganischem Material, wie beispielsweise einem (Drehrohr-)Ofen zum Brennen von Zementklinker, stammt, zum Einsatz kommen kann.

Die Abgasbehandlungsvorrichtung 1 umfasst einen Oxidationskatalysator 5 und eine erste, dem Oxidationskatalysator 5 zugeordnete Vorwärmvorrichtung 3, einen Reduktionskatalysator 2, eine zweite, dem Reduktionskatalysator 2 zugeordnete Vorwärmvorrichtung 6 für das Abgas und eine zwischen der zweiten Vorwärmvorrichtung 6 und dem Reduktionskatalysator 2 angeordnete Zudosiervorrichtung 4 für ein Reduktionsmittel. Der Oxidationskatalysator 5 ist in Strömungsrichtung des Abgases hinter dem Reduktionskatalysator 2 angeordnet. Damit ist der Vorteil verbunden, dass der Reduktionskatalysator 2 als "Filter" beziehungsweise "Fänger" für den Oxidationskatalysator 5 hinsichtlich bestimmter Schadstoffe (z.B. Schwefel, Alkalien, Schwermetalle) wirken kann. Diese Schadstoffe bewirken nämlich keine oder eine nur geringe Aktivitätsabnahme des Reduktionskatalysators 2, würden aber, ohne eine Filterung durch den Reduktionskatalysator 2, zu einer starken Aktivitätsabnahme des Oxidationskatalysators 5 führen.

Jede der Vorwärmvorrichtungen 3, 6 umfasst zwei Wärmetauscher 7, von denen jeweils einer von dem Abgas direkt vor dem Eintritt in den jeweils zugeordneten Katalysator und der andere in Strömungsrichtung hinter dem Oxidationskatalysator 5 angeordnet ist. Diese Verschaltung der zwei Wärmespeicher 7 jeder der Vorwärmvorrichtungen 3, 6 ist umschaltbar, wie dies in den beiden Fig. 1 und 2 gezeigt ist.

Die Wärmetauscher 7 umfassen jeweils eine keramische Wärmespeichermasse 15, die sich durch eine hohe Wärmekapazität auszeichnet. Die von dem aus dem Oxidationskatalysator 5 ausgetretenen Abgas durchströmten Wärmespeicher 7 werden von dem Abgas aufgeheizt und entziehen diesem dadurch Wärmeenergie. Diese Wärmeenergie wird (zu einem Großteil) zwischengespeichert. Durch ein Umschalten der Wärmespeicher 7 der beiden Vorwärmvorrichtungen 3, 6 besteht dann die Möglichkeit, die beiden durch das aus dem Oxidationskatalysator 5 ausgetretene Abgas aufgeladenen Wärmespeicher in den Strom des in den jeweils zugeordneten Katalysator eintretenden Abgases zu integrieren, wodurch die zwischengespeicherte Wärmeenergie auf den jeweiligen Abgasstrom teilweise übertragen wird und zu der vorgesehenen Vorwärmung des Abgases führt. Dabei beruht der mittels der Vorwärmvorrichtungen 3, 6 erzielbare Wärmeübergang von dem Abgas stromab des Oxidationskatalysators 5 auf das Abgas stromauf des Oxidationskatalysators 5 (und teilweise auch stromauf des Reduktionskatalysators 2) auf der Erzeugung von Wärmeenergie durch die in dem Oxidationskatalysator 5 ablaufende exotherme Oxidation von insbesondere Kohlenmonoxid (CO) und organischen Kohlenwasserstoffen gemäß den nachfolgenden Reaktionsgleichungen:

2 CO + O₂ → 2 CO₂;

CₙHₘ + (n+m/4) O₂ → n CO₂ + m/2 H₂O.

In dem Reduktionskatalysator 2 erfolgt dagegen eine Reduktion von Stickoxiden (NOx) und insbesondere von Stickstoffmonoxid (NO) in Verbindung mit der über die Zudosiervorrichtung 4 als Reduktionsmittel in das Abgas eingebrachten wässerigen Ammoniaklösung gemäß der nachfolgenden Reaktionsgleichung:

4 NO + 4 NH₃ + O₂ → 4N₂ + 6 H₂O.

Für möglichst hohe Minderungsraten von Stickoxiden im Reduktionskatalysator einerseits und Kohlenmonoxid und Kohlenwasserstoffen im Oxidationskatalysator andererseits sind unterschiedliche Temperaturen des Abgases in den jeweiligen Katalysatoren vorgesehen. Beispielsweise kann eine Temperatur des der Abgasbehandlungsvorrichtung 1 mit beispielsweise ca. 150°C zugeführten Abgases beim Eintritt in den Reduktionskatalysator 2 von ca. 240°C optimal sein, während das Abgas beim Eintritt in den Oxidationskatalysator 5 eine Temperatur von ca. 380°C aufweisen sollte. Die jeweilige Temperaturzunahme wird durch ein Vorwärmen des Abgases vor dem Eintritt in den Reduktionskatalysator 2 mittels der zweiten Vorwärmvorrichtung 6 und vor dem Eintritt in den Oxidationskatalysator 5 mittels der ersten Vorwärmvorrichtung 3 erreicht. Infolge der Differenz der für den Reduktionskatalysator 2 einerseits und den Oxidationskatalysator 5 andererseits einzustellenden Temperaturen des Abgases kann vorteilhaft vorgesehen sein, dass das aus dem Oxidationskatalysator 5 ausgetretene Abgas zunächst den gerade entsprechend verschalteten Wärmetauscher 7 der ersten Vorwärmvorrichtung 3 und anschließend, d.h. im bereits abgekühlteren Zustand (mit beispielsweise ca. 240°C), den gerade entsprechend verschalteten Wärmetauscher 7 der zweiten Vorwärmvorrichtung 6 durchströmt (den das Abgas dann mit beispielsweise ca. 150°C wieder verlässt).

Ein möglichst exaktes Erreichen der für die beiden Katalysatoren einzustellenden Abgastemperaturen kann zum einen durch eine entsprechende Auslegung der Wärmetauscher 7 der Vorwärmvorrichtungen 3, 6 erreicht werden. Dabei kann der Wärmeübergang von dem Abgas auf die Wärmespeicher 7 stromab des Oxidationskatalysators 5 und von den Wärmespeichern 7 auf das Abgas stromauf des Oxidationskatalysators 5 (und bei der zweiten Vorwärmvorrichtung 6 auch stromauf des Reduktionskatalysators 2) beispielsweise durch die Volumina der jeweiligen Wärmespeichermassen 15, die Größen der Kontaktflächen zwischen den Wärmespeichermassen 15 und dem Abgas und/oder die mittlere Strömungsgeschwindigkeit des Abgases durch die Wärmespeichermassen 15 beeinflusst werden.

Andererseits ist für ein möglichst exaktes Erreichen der für die beiden Katalysatoren einzustellenden Abgastemperaturen auch vorgesehen, bei Bedarf mittels jeweils eines Zuheizers 8, in dem ein Brennstoff, wie beispielsweise Erdgas, Erdöl oder Kohle verbrennt werden kann, um Wärmeenergie zu erzeugen, das Abgas an der jeweiligen Stelle zusätzlich vorzuwärmen. Dabei sind die Zuheizer 8 von einer nicht dargestellten Regelvorrichtung angesteuert, die in Abhängigkeit von der jeweils vorgesehenen (Soll-)Abgastemperatur die zusätzliche Wärmeerzeugung mittels der Zuheizer 8 regelt.

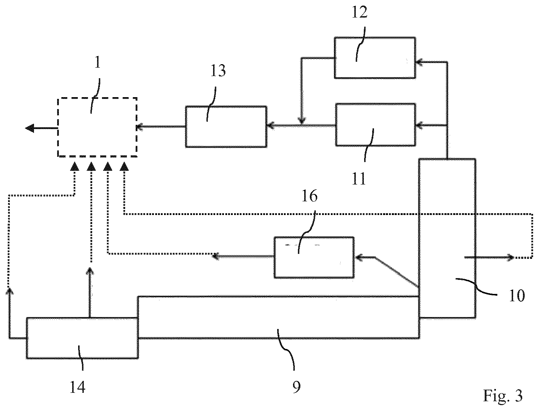

Ein Vorwärmen des Abgases stromauf des Reduktionskatalysators 2 und zwischen dem Reduktionskatalysator 2 sowie dem Oxidationskatalysator 5 kann alternativ oder zusätzlich zu einer regenerativen Nutzung von Wärmeenergie, die dem behandelten Abgas selbst entzogen wird, auch durch einen Wärmetausch mit einem anderem Medium, insbesondere einer Fluidströmung und besonders bevorzugt einer Gasströmung, erreicht werden. Verschiedene Möglichkeiten dafür sind in der Fig. 3 dargestellt.

Die Fig. 3 zeigt die Integration einer erfindungsgemäßen Abgasbehandlungsvorrichtung 1 in eine Anlage zum Brennen von Zementklinker. Die Anlage umfasst neben der Abgasbehandlungsvorrichtung 1 einen Drehrohrofen 9, in dem fein gemahlenes Zementrohmehl, das zuvor in einem Materialvorwärmer 10 im Gegenstrom von aus dem Drehrohrofen 9 ausgetretenem Abgas vorgewärmt wurde, zu Zementklinker gebrannt wird. Das aus dem Materialvorwärmer 10 ausgetretene Abgas durchströmt dann entweder einen Kühlturm 11 oder wird zumindest teilweise in einer Rohmühle 12 zum Trocknen des Zementrohmehls beim Mahlen genutzt. Anschließend wird das Abgas in einem Staubfilter 13 entstaubt und zur Abgasbehandlung der Abgasbehandlungsvorrichtung 1 zugeführt. Weiterhin umfasst die Anlage noch einen Klinkerkühler 14, in dem der aus dem Drehrohrofen 9 ausgebrachte Zementklinker mittels Kühlluft gekühlt wird.

Die Fig. 3 zeigt anhand der gestrichelten Pfeile, dass beispielsweise ein Teilstrom des Abgases direkt stromauf, direkt stromab oder aus dem Materialvorwärmer 10 selbst abgezweigt und - gegebenenfalls nach einer Vorbehandlung mittels einer Vorbehandlungsvorrichtung 16 - zum Vorwärmen des die Abgasbehandlungsvorrichtung 1 durchströmenden Abgases genutzt werden kann. Ebenso kann die Kühlluft aus dem Klinkerkühler 14 entsprechend genutzt werden, wobei eine Abzweigung sowohl noch vor als auch nach einem vollständigen Durchströmen des Klinkerkühlers 14 möglich ist, was einen Einfluss auf die Temperatur der Kühlluft und damit den möglichen Wärmeübergang auf das die Abgasbehandlungsvorrichtung 1 durchströmende Abgas hat.

### Bezugszeichen:

- 1.: Abgasbehandlungsvorrichtung
- 2.: Reduktionskatalysator
- 3.: erste Vorwärmvorrichtung
- 4.: Zudosiervorrichtung für ein Reduktionsmittel
- 5.: Oxidationskatalysator
- 6.: zweite Vorwärmvorrichtung
- 7.: Wärmetauscher
- 8.: Zuheizer
- 9.: Drehrohrofen
- 10.: Materialvorwärmer
- 11.: Kühlturm
- 12.: Rohmühle
- 13.: Staubfilter
- 14.: Klinkerkühler
- 15.: keramische Wärmespeichermasse
- 16.: Vorbehandlungsvorrichtung

## Patentansprüche

1. Abgasbehandlungsvorrichtung (1) mit einem Reduktionskatalysator (2) und einem dem Reduktionskatalysator (2) nachgeschalteten Oxidationskatalysator (5), der für eine Oxidation von kohlenstoffhaltigen Verbindungen vorgesehen ist, wobei zwischen dem Reduktionskatalysator (2) und dem Oxidationskatalysator (5) eine erste Temperaturbeeinflussungsvorrichtung für das Abgas angeordnet ist.

2. Abgasbehandlungsvorrichtung (1) gemäß Anspruch 1, aufweisend eine stromauf des Reduktionskatalysators (2) angeordnete zweite Temperaturbeeinflussungsvorrichtung für das Abgas.

3. Abgasbehandlungsvorrichtung (1) gemäß Anspruch 1 oder 2, wobei die erste Temperaturbeeinflussungsvorrichtung und/oder die zweite Temperaturbeeinflussungsvorrichtung als Vorwärmvorrichtung (3, 6) ausgebildet ist.

4. Abgasbehandlungsvorrichtung (1) gemäß einem der Ansprüche 1 bis 3, wobei die erste Temperaturbeeinflussungsvorrichtung und/oder die zweite Temperaturbeeinflussungsvorrichtung einen Wärmetauscher (7) umfasst.

5. Abgasbehandlungsvorrichtung (1) gemäß Anspruch 4, wobei in dem Wärmetauscher (7) ein Wärmeübergang von Abgas stromab des Oxidationskatalysators (5) erfolgt.

6. Abgasbehandlungsvorrichtung (1) gemäß Anspruch 4 oder 5, wobei in dem Wärmetauscher (7) ein Wärmeübergang von einem anderen Medium erfolgt.

7. Abgasbehandlungsvorrichtung (1) gemäß Anspruch 6, wobei der Wärmetauscher (7) eine oder mehrere Wärmetauscherstufen umfasst, wobei eine erste Zufuhr für das Medium, bezogen auf die Richtung des Durchlaufs des Mediums durch den Wärmetauscher (7), hinter einer Wärmetauscherstufe angeordnet ist und eine zweite Zufuhr für das Medium, bezogen auf die Richtung des Durchlaufs des Mediums durch den Wärmetauscher, vor dieser Wärmetauscherstufe angeordnet ist, und eine Steuereinrichtung zur Aufteilung des Mediums auf die erste Zufuhr und die zweite Zufuhr vorgesehen ist.

8. Abgasbehandlungsvorrichtung (1) gemäß einem der Ansprüche 4 bis 7, wobei der Wärmetauscher (7) einen Wärmespeicher umfasst.

9. Abgasbehandlungsvorrichtung (1) gemäß Anspruch 8, wobei die erste Temperaturbeeinflussungsvorrichtung und/oder die zweite Temperaturbeeinflussungsvorrichtung mindestens zwei Wärmespeicher umfasst, die wechselweise entweder von dem dem Oxidationskatalysator (5) oder dem Reduktionskatalysator (2) zuzuführenden Abgas durchströmt werden, um dieses vorzuwärmen, oder von aus dem Oxidationskatalysator (5) ausgetretenem Abgas durchströmt werden, um von diesem Wärmeenergie aufzunehmen.

10. Abgasbehandlungsvorrichtung (1) gemäß Anspruch 8 oder 9, wobei der oder die Wärmespeicher eine keramische Wärmespeichermasse (15) umfassen.

11. Abgasbehandlungsvorrichtung (1) gemäß einem der vorhergehenden Ansprüche, wobei die erste Temperaturbeeinflussungsvorrichtung und/oder die zweite Temperaturbeeinflussungsvorrichtung einen Zuheizer (8) umfasst.

12. Abgasbehandlungsvorrichtung (1) gemäß einem der vorhergehenden Ansprüche, wobei die erste Temperaturbeeinflussungsvorrichtung und/oder die zweite Temperaturbeeinflussungsvorrichtung einen Zumischer für ein Fluid umfasst.

13. Abgasbehandlungsvorrichtung (1) gemäß einem der vorhergehenden Ansprüche, wobei dem Reduktionskatalysator (2) vorgeschaltete Staubfilter (13).

14. Abgasbehandlungsvorrichtung (1) gemäß einem der vorhergehenden Ansprüche, wobei stromauf des Reduktionskatalysators (2) angeordnete Zudosiervorrichtung (4) für ein Reduktionsmittel.

15. Verfahren zur Abgasbehandlung, bei dem das Abgas durch einen Reduktionskatalysator (2) und anschließend einen Oxidationskatalysator (5), der für eine Oxidation von kohlenstoffhaltigen Verbindungen vorgesehen ist, geführt wird, wobei die Temperatur des Abgases nach der Behandlung in dem Reduktionskatalysator (2) und vor der Behandlung in dem Oxidationskatalysator (5) beeinflusst wird.

16. Verfahren gemäß Anspruch 15, wobei das Abgas vor der Behandlung in dem Oxidationskatalysator (5) auf eine Temperatur von zwischen 250°C und 650°C, vorzugsweise von zwischen 300°C und 500°C und besonders bevorzugt von zwischen 350°C und 450°C erwärmt wird.

17. Verfahren gemäß Anspruch 15 oder 16, wobei die Temperatur des Abgases vor der Behandlung in dem Reduktionskatalysator (2) beeinflusst wird.

18. Verfahren gemäß Anspruch 17, wobei das Abgas vor der Behandlung in dem Reduktionskatalysator (2) auf eine Temperatur von zwischen 160°C und 380°C, vorzugsweise von zwischen 180°C und 370°C und besonders bevorzugt von zwischen 200°C und 350°C erwärmt wird.

19. Verwendung einer Abgasbehandlungsvorrichtung (1) gemäß einem der Ansprüche 1 bis 14 oder Durchführung eines Verfahrens gemäß einem der Ansprüche 15 bis 18 bei der Herstellung und/oder Bearbeitung von Zement, Kalk und/oder Mineralien.

## Claims

1. Offgas treatment apparatus (1) having a reduction catalyst (2) and an oxidation catalyst (5) which is located downstream of the reduction catalyst (2) and is provided for oxidation of carbon-containing compounds, wherein a first temperature influencing device for the offgas is arranged between the reduction catalyst (2) and the oxidation catalyst (5) .

2. Offgas treatment apparatus (1) according to Claim 1 comprising a second temperature influencing device for the offgas which is arranged upstream of the reduction catalyst (2).

3. Offgas treatment apparatus (1) according to Claim 1 or 2, wherein the first temperature influencing device and/or the second temperature influencing device is configured as preheating device (3, 6).

4. Offgas treatment apparatus (1) according to any of Claims 1 to 3, wherein the first temperature influencing device and/or the second temperature influencing device comprises a heat exchanger (7).

5. Offgas treatment apparatus (1) according to Claim 4, wherein heat transfer from offgas downstream of the oxidation catalyst (5) occurs in the heat exchanger (7).

6. Offgas treatment apparatus (1) according to Claim 4 or 5, wherein heat transfer from another medium occurs in the heat exchanger (7).

7. Offgas treatment apparatus (1) according to Claim 6, wherein the heat exchanger (7) comprises one or more heat exchanger stages, where a first inlet for the medium is, based on the direction of flow of the medium through the heat exchanger (7), arranged downstream of a heat exchanger stage and a second inlet for the medium is, based on the direction of flow of the medium through the heat exchanger, arranged upstream of this heat exchanger stage and a control device for distributing the medium over the first inlet and the second inlet is provided.

8. Offgas treatment apparatus (1) according to any of Claims 4 to 7, wherein the heat exchanger (7) comprises a heat store.

9. Offgas treatment apparatus (1) according to Claim 8, wherein the first temperature influencing device and/or the second temperature influencing device comprises at least two heat stores through which the offgas to be fed to the oxidation catalyst (5) or to the reduction catalyst (2) flows alternately in order to preheat the offgas or through which the offgas exiting from the oxidation catalyst (5) flows in order for heat energy to be taken up from the offgas.

10. Offgas treatment apparatus (1) according to Claim 8 or 9, wherein the heat store or stores comprise a ceramic heat storage composition (15).

11. Offgas treatment apparatus (1) according to any of the preceding claims, wherein the first temperature influencing device and/or the second temperature influencing device comprises a supplementary heater (8) .

12. Offgas treatment apparatus (1) according to any of the preceding claims, wherein the first temperature influencing device and/or the second temperature influencing device comprises a device for introducing a fluid.

13. Offgas treatment apparatus (1) according to any of the preceding claims, wherein a dust filter (13) is installed upstream of the reduction catalyst (2).

14. Offgas treatment apparatus (1) according to any of the preceding claims, wherein a metering-in device (4) for a reducing agent is arranged upstream of the reduction catalyst (2).

15. Process for offgas treatment, in which the offgas is conveyed through a reduction catalyst (2) and subsequently an oxidation catalyst (5) which is provided for oxidation of carbon-containing compounds, wherein the temperature of the offgas is influenced after the treatment in the reduction catalyst (2) and before the treatment in the oxidation catalyst (5).

16. Process according to Claim 15, wherein the offgas is heated to a temperature in the range from 250°C to 650°C, preferably from 300°C to 500°C and particularly preferably from 350°C to 450°C, before the treatment in the oxidation catalyst (5).

17. Process according to Claim 15 or 16, wherein the temperature of the offgas is influenced before the treatment in the reduction catalyst (2).

18. Process according to Clam 17, wherein the offgas is heated to a temperature in the range from 160°C to 380°C, preferably from 180°C to 370°C and particularly preferably from 200°C to 350°C, before the treatment in the reduction catalyst (2).

19. Use of an offgas treatment apparatus (1) according to any of Claims 1 to 14 or operation of a process according to any of Claims 15 to 18 in the production and/or processing of cement, lime and/or minerals.

## Revendications

1. Dispositif de traitement de gaz d'échappement (1) comprenant un catalyseur de réduction (2) et un catalyseur d'oxydation (5) monté en aval du catalyseur de réduction (2), lequel est prévu pour oxyder des composés carbonés, un premier dispositif permettant d'influer sur la température des gaz d'échappement étant disposé entre le catalyseur de réduction (2) et le catalyseur d'oxydation (5).

2. Dispositif de traitement de gaz d'échappement (1) selon la revendication 1, comportant un deuxième dispositif permettant d'influer sur la température des gaz d'échappement, lequel est disposé en amont du catalyseur de réduction (2).

3. Dispositif de traitement de gaz d'échappement (1) selon la revendication 1 ou 2, le premier dispositif permettant d'influer sur la température et/ou le deuxième dispositif permettant d'influer sur la température étant conçus comme un dispositif de préchauffage (3, 6).

4. Dispositif de traitement de gaz d'échappement (1) selon l'une des revendications 1 à 3, le premier dispositif permettant d'influer sur la température et/ou le deuxième dispositif permettant d'influer sur la température comprenant un échangeur de chaleur (7).

5. Dispositif de traitement de gaz d'échappement (1) selon la revendication 4, un transfert de chaleur depuis les gaz d'échappement en aval du catalyseur d'oxydation (5) étant effectué dans l'échangeur de chaleur (7).

6. Dispositif de traitement de gaz d'échappement (1) selon la revendication 4 ou 5, un transfert de chaleur depuis un autre milieu étant effectué dans l'échangeur de chaleur (7).

7. Dispositif de traitement de gaz d'échappement (1) selon la revendication 6, l'échangeur de chaleur (7) comprenant au moins un étage échangeur de chaleur, une première alimentation en milieu étant disposée en arrière d'un étage échangeur de chaleur par rapport au sens de passage du milieu à travers l'échangeur de chaleur (7) et une deuxième alimentation en milieu étant disposée en avant de cet étage échangeur de chaleur par rapport au sens de passage du milieu à travers l'échangeur de chaleur et un moyen de commande étant prévu pour répartir le milieu entre la première alimentation et la deuxième alimentation.

8. Dispositif de traitement de gaz d'échappement (1) selon l'une des revendications 4 à 7, l'échangeur de chaleur (7) comprenant un accumulateur de chaleur.

9. Dispositif de traitement de gaz d'échappement (1) selon la revendication 8, le premier dispositif permettant d'influer sur la température et/ou le deuxième dispositif permettant d'influer sur la température comprenant au moins deux accumulateurs de chaleur qui sont traversés alternativement soit par les gaz d'échappement amenés au catalyseur d'oxydation (5) ou au catalyseur de réduction (2) pour préchauffer ces gaz d'échappement soit par les gaz d'échappement sortant du catalyseur d'oxydation (5) pour absorber l'énergie calorifique.

10. Dispositif de traitement de gaz d'échappement (1) selon la revendication 8 ou 9, l'au moins accumulateur de chaleur comprenant une masse accumulatrice de chaleur en céramique (15).

11. Dispositif de traitement de gaz d'échappement (1) selon l'une des revendications précédentes, le premier dispositif permettant d'influer sur la température et/ou le deuxième dispositif permettant d'influer sur la température comprenant un élément chauffant (8).

12. Dispositif de traitement de gaz d'échappement (1) selon l'une des revendications précédentes, le premier dispositif permettant d'influer sur la température et/ou le deuxième dispositif permettant d'influer sur la température comprenant un mélangeur destiné à un fluide.

13. Dispositif de traitement de gaz d'échappement (1) selon l'une des revendications précédentes, un filtre anti-poussières (13) étant en amont du catalyseur de réduction (2).

14. Dispositif de traitement de gaz d'échappement (1) selon l'une des revendications précédentes, un dispositif de dosage (4) destiné à un agent réducteur étant disposé en amont du catalyseur de réduction (2).

15. Procédé de traitement de gaz d'échappement, dans lequel les gaz d'échappement sont guidés à travers un catalyseur de réduction (2) puis un catalyseur d'oxydation (5) qui est prévu pour oxyder des composés carbonés, une influence étant exercée sur la température des gaz d'échappement après le traitement dans le catalyseur de réduction (2) et avant le traitement dans le catalyseur d'oxydation (5).

16. Procédé selon la revendication 15, les gaz d'échappement étant chauffés avant le traitement dans le catalyseur d'oxydation (5) à une température comprise entre 250 °C et 650 °C, de préférence entre 300 °C et 500 °C et de manière particulièrement préférée entre 350 °C et 450 °C.

17. Procédé selon la revendication 15 ou 16, une influence étant exercée sur la température des gaz d'échappement avant le traitement dans le catalyseur de réduction (2) .

18. Procédé selon la revendication 17, les gaz d'échappement étant chauffés avant le traitement dans le catalyseur de réduction (2) à une température comprise entre 160 °C et 380 °C, de préférence entre 180 °C et 370 °C et de manière particulièrement préférée entre 200 °C et 350 °C.

19. Utilisation d'un dispositif de traitement de gaz d'échappement (1) selon l'une des revendications 1 à 14 ou mise en oeuvre d'un procédé selon l'une des revendications 15 à 18 pour la fabrication et/ou le traitement de ciment, de chaux et/ou de minéraux.
